# EUROPEAN PATENT APPLICATION

(11) **EP 2 270 576 A1**
(43) Date of publication of application: **05.01.2011**
(21) Application number: 10006131.6
(22) Date of filing: 14.06.2010
(51) Int. Cl.: G02C 5/22

(54) **Spectacles frame with hinge arrangement and method for assembling the spectacles frame**

(30) Priority: 24.06.2009 DK 200900776
(71) Applicant: Monoqool ApS, 3480 Fredensborg (DK)
(72) Inventor: Jensen, Claus, 2400 København NV (DK); Holbæk, Henrik, 2400 København NV (DK)
(74) Representative: Nordic Patent Service A/S

(57) **Abstract**

Spectacles or a spectacle frame with a front part and a pair of temples hingealbly connected to the front part by a hinge construction that uses a row of apertures in the front part and a helical wire section. One end of the helical wire section is attached to an extremity of a temple and the helical wire section is threaded through the apertures in the row.

## Description

### FIELD OF THE INVENTION

The present invention relates to eyeglasses and spectacles, and in particular to hinge construction for connecting the temples to the front part of the frame of eyeglasses or spectacles and to a method of assembling the frame for eyeglasses or spectacles.

### BACKGROUND OF THE INVENTION

A vast myriad of different hinge constructions for connecting the temples to the front part of eyeglasses or spectacles is known. The hinge construction must fulfill several requirements. It must allow the temples to be moved between a folded position for storage and transport of the eyeglasses and an open position. Further, it must keep the temples in the open position in a firm way. Further, the hinge construction must be light and strong, inexpensive and easy to assemble.

The most common hinge construction resembles a "door hinge" type of mechanism having a pin connecting two hinge halves, each of which is attached to the frame by screws or rivets. The pin is a threaded screw or bolt so as to fix the pin and to tighten the hinge by adjusting the screw to a friction level that is appropriate, typically so that the temples stay in the position that they are left. In this type of hinge construction there are many parts to manufacture and go wrong. Most commonly this screw will work loose and may become lost.

WO 98/40778 discloses spectacles with a hinge construction that uses of wire material. A wire section at an extremity of the temples is wound tight so as to form a tightly wound coil that resembles a cylinder. A pin attached to the front part of the spectacle frame is received inside the wire coil to form a hinge. It is relatively complicated to provide for an end to stop and to provide for sufficient friction in this type of hinge construction.

GB 614,613 discloses a pair of goggles with a hinge construction that involves a helical wire that is threaded through a row of apertures in the front part of the frame and through a row of apertures in the wide proximate extremity of a temple. This hinge construction is not suitable for spectacles since they normally have very slender temples. Further, this hinge construction does not provide for an end stop.

### DISCLOSURE OF THE INVENTION

On this background, it is an object of the present invention to provide a hinge construction for spectacles or a spectacle frame that is simple, reliable, aesthetic and easy to manufacture.

This object is achieved by providing spectacles or a spectacle frame, said spectacles or spectacle frame comprising a front part for receiving the lenses and a pair of temples, each of the temples is connected at one of their extremities to an end of the front part by a hinge construction to allow the temples to move between a folded and an open position, wherein the hinge construction comprises a row of apertures located at an end of the front part and a helical wire section with one end of the wire section attached to a temple and the helical wire section being threaded through the apertures in the row.

The hinge construction is easy to manufacture since it simple and involves only features that can be achieved in a straightforward manner and involves very few components. The construction is a reliable since there are not parts that can come loose or disengaged.

Preferably, the helical wire section has a helical portion that is threaded though the apertures and a substantially straight portion that is connected to an extremity of a temple or the straight section is part of a temple.

The hinge construction can be configured such that the free end of the helical wire section abuts with a surface of the front part when the temple is in said open position

An indentation can be provided in the surface of the front part at the position where the free end of the wire section abuts with the front part.

The front part may surround a pair of lenses and the row of apertures may include an aperture that interrupts a loop of material of the front part surrounding a lens, said row of apertures and said spiral wire section being configured to close said open loop and to tighten said loop around the lens when the spiral wire section is threaded through the apertures.

The front part may comprise two ledges at a substantially straight angle with the overall extend of the front part and the row of apertures is located in said ledges

The row of apertures can be located in the lenses for obtain a rimless frame.

The cross sectional of said helical wire section wire has a circular or oval or rectangular or polygon shape.

The object above is also achieved by a method for assembling a spectacle frame, said method comprising threading a helical wire section attached at one of its extremities to an extremity of a temple through a row of apertures provided in a front part of a spectacle frame.

The method allows for a simple effective and reliable assembly of the frame.

Further objects, features, advantages and properties of the spectacle frame and method according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:
Figure 1 is an elevated view of a pair of spectacles or eyeglasses with a frame and hinge construction according to an embodiment of the invention,
Figure 2 is a front view of a detail of the front part of a spectacle frame according to an embodiment of the invention,
Figure 3 is a front view of a detail of the front part of a spectacle frame according to the embodiment of figure 1,
Figure 4 illustrates an initial phase of the process of threading a helical wire section of the hinge construction of the spectacle frame according to figure 1,
Figure 5a illustrates a first interim phase of the process of threading a helical wire section of the hinge construction of the spectacle frame according to figure 1,
Figure 5b illustrates a second interim phase of the process of threading a helical wire section of the hinge construction of the spectacle frame according to figure 1,
Figure 6 illustrates an final phase of the process of threading a helical wire section of the hinge construction of the spectacle frame according to figure 1,
Figure 7 illustrates another embodiment of the hinge construction of the spectacles or spectacle frame according to the invention,
Figure 8 illustrates yet another embodiment of the hinge construction of the spectacles or spectacle frame according to the invention,
Figure 9 is a top view on the front part of the frame, the hinge construction and a temple of the spectacle frame according to figure 1,
Figure 10 is a side view on a temple as according to the embodiment of figure 1,
Figure 11 is a top view on a temple as according to the embodiment of figure 1,
Figure 12 is another embodiment of the spectacles according to the present invention with a so called rimless frame, and
Figure 13 is another embodiment of the spectacles according to the present invention with wire for the helical.

### DETAILED DESCRIPTION OF THE PREFERRED EMBODIMENTS

In the following detailed description of the spectacle frame and spectacles (eyeglasses) according to the invention will be described by the exemplary embodiments.

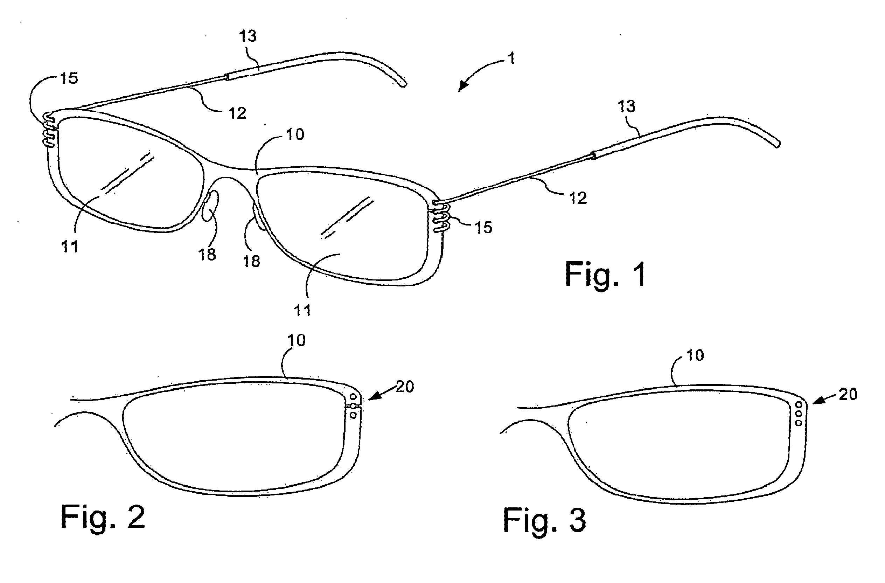

Figures 1 and 2 show an embodiment of the spectacles according to the invention. The spectacles comprise a spectacle frame with a front part 10 and a pair of temples 12 that are hingeably connected to the front part 10 so that they can move between a folded position (not shown) and an open position (shown).

The front part 10 is provided with loops that surround the lenses 11 and with two nose pads 18. The front part 10 can be made of any usual material for spectacles, such as for example plastic (also fiber reinforced), various metals including stainless steel, in the form of plate, wire or molded material.

Each temple 12 has front end for attaching to a front part 10 of the spectacles and a tip end for locating over the user's ear.

In the embodiment of figures 1 and 2 the temples 12 are made of wire material with a circular cross-section and are provided with a sleeve 13 of a suitable material, such as a plastic material for resting on the ears of the user.

The temples 12 are connected to the front part 10 by a hinge construction that includes a helical wire section 15. In this embodiment the wire material of the temple 12 is formed as one piece with the helical wire section 15. The helical wire section 15 is threaded through a role of apertures 20 that is provided in the front part 10. The helical wire section 15 can rotate inside the row of apertures 20 to a certain extent so as to allow the temple 12 to move between the folded position and the open position. In the open position the free end of the helical wire section 15 abuts with the surface of the front part 10 and the temple 12 can therefore not move further outwards than the shown open position. Thereby, the spectacles are firmly held on a user's head.

At the position on the surface of the front part 10 where the free end of the helical portion 15 abuts therewith there can be provided an indentation (not shown) that ensures that the free end of the helical portion 15 does not move sideways over the surface of the front part when the free end of the helical portion 15 is forced to the surface and thus, scratching of the surface of the front part 10 can be avoided.

A row of apertures 20 is provided at each side (extremity) of the front part 10. In the embodiment of figures 1 and 2 one of the apertures is shaped such that the loop of the front part 10 for surrounding the lens 11 is interrupted. This interruption allows the loop to slightly open and close for inserting and subsequently securing the lens 11.

When the helical wire section 15 is threaded through the apertures in the loop in the front part 10 is closed and tightened.

In an embodiment the lead of the helical wire section 15 is chosen to give a slight discrepancy between the distance between successive windings of the helical wire section 15 and the distance between successive apertures in the row 20 to cause a certain amount of friction that ensures that the temples stay in the position at which a user leaves them, e.g. in the folded or in the open position.

When the open loop front part 10 of figures 1 and 2 is used the helical wire section is preferably wound with a lead that gives a distance between successive windings of the spiral wire section 15 that is slightly less than the distance between the successive apertures in the row so that the loop is tightened when the helical wire section is threaded through the row of apertures 20 to thereby secure the lens 11.

Figure 3 is a detail of another embodiment that is essentially the same as the embodiment of figures 1 and 2, except that the loop of the front part 10 for surrounding the lens 11 is closed, i.e. not interrupted by one of the apertures in a row 20.

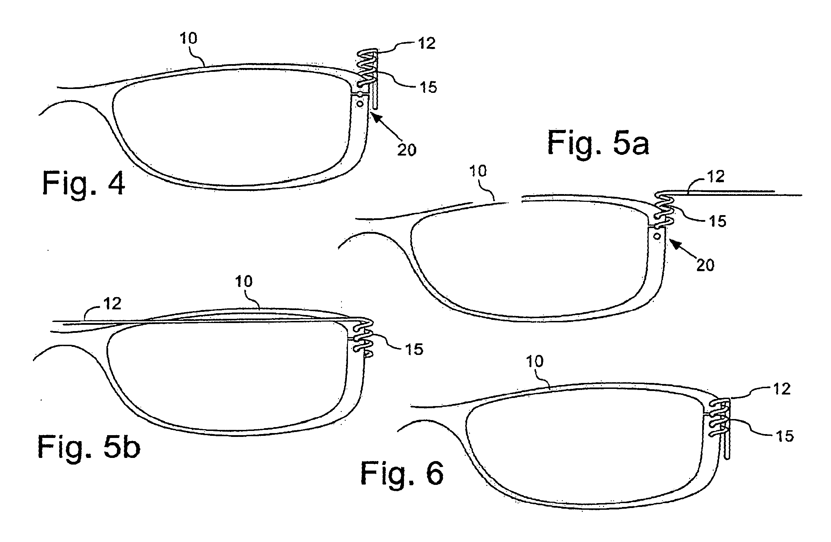

Figures 4 to 6 illustrate the process of threading a helical section 15 through the row apertures 20. During the initial phase of the process in figure 4 the free end of the helical section 15 is inserted in the upper aperture of the row of apertures 20. Thereafter, in the intermediate phase of the process the helical wire section 15 that is one part with the temple 12 is rotated so as to thread the helical wire section 15 through all of the apertures in the row 20. In the final phase of the process in figure 6, the free end of the helical section 15 abuts with the surface of the front part 10 and the temple 12 has reached its open position and cannot be rotated any further, except backwards to its fold position.

The handedness of the windings in the helical wire section 15 is chosen such that rotation in the direction in which the temple 12 moves from the folded position to the open position causes the helical section to be threaded further into the row of holes. As shown in figure 5a, the shape of the front part 10, of the temple 12 and the positioning of the row of apertures 20 is in an embodiment configured such that the temple needs to be slightly bended (without causing permanent deformation) in order to pass over the front part 10, at least for the final turn of the threading process. This is to avoid that the helical wire section 15 and the temple 12 could get un-threaded inadvertently.

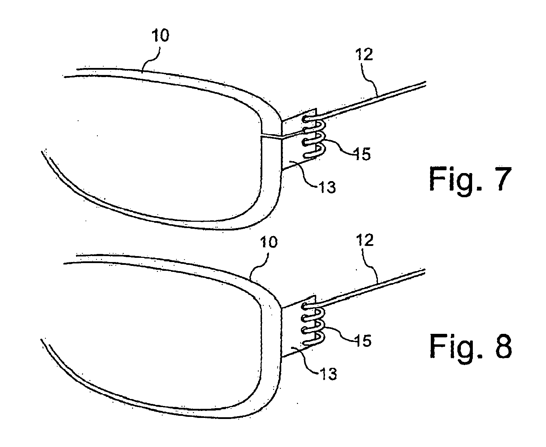

Figures 7 and 8 show further embodiments that are essentially identical to the embodiment of figures 1 and 2 except that the in front part 10 is provided with a ledge 13 at each of its extremities. The ledge 13 is disposed at a substantially right angle with the overall extend of the front part 10. The row of apertures 20 is a provided in the ledge 13. This embodiment comes in two versions, one version according to figure 7 with an open loop frame of the front part 10 and another version according to figure 8 with a closed loop frame.

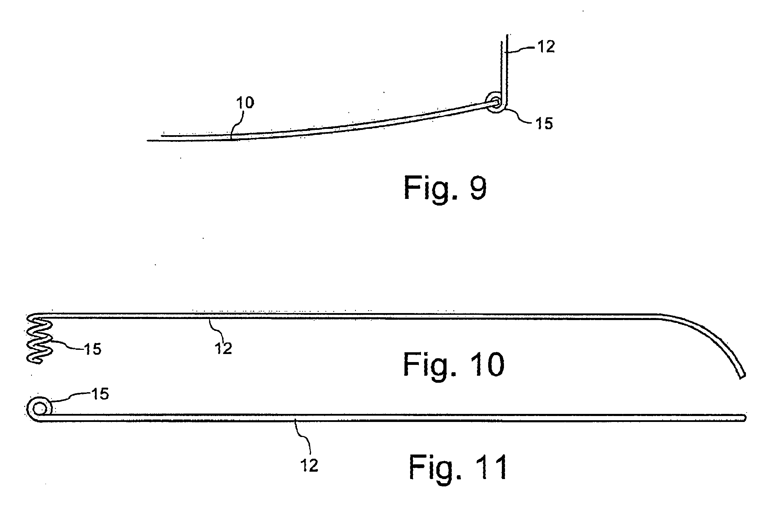

Figure 9 is a view on the top of the spectacles 1 according to figures 1 and 2. The curved shape of the front part 10 and the angle between the main extent of the front part 10 and the temple 12 in its open position can be recognized in this figure.

Figure 10 is a side view of a temple 12 as used in the preceding embodiments and that is made of wire and the helical wire section 15 is integral (made in one piece) with the temple 12.

Figure 11 is a top view on the same temple 12. Of course, this temple 12 will normally be provided with a sleeve 13 as shown in figure 1.

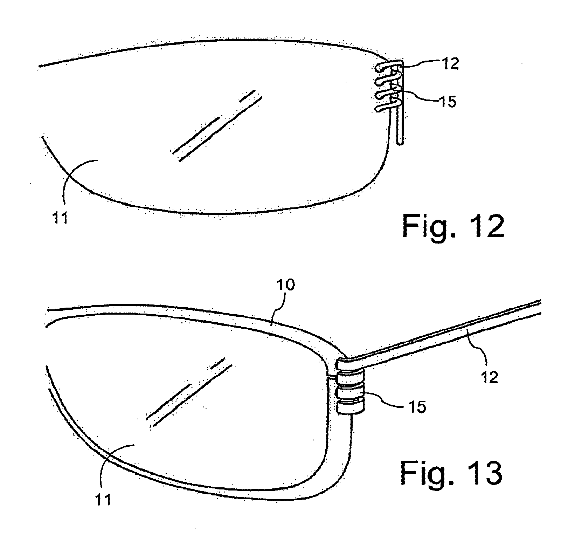

Figure 12 shows another embodiment of the invention that is essentially identical to the embodiments of figures 1 and 2, except that the frame is rimless and therefore the front part 10 mainly consists of the lenses 11 and the row of apertures 20 is located in lens 11, e.g. near the edge of the lens 11.

Figure 13 shows another embodiment that is essentially identical to the embodiment of figures 1 and 2, except that the cross-section of the wire material for the helical wire section 15 is rectangular. Also the wire material that makes up most of the temple 12 has a rectangular cross-section.

The embodiments described above are illustrated with reference to substantially closed apertures in the row of apertures. However, the invention can also be used with apertures that open up to one side of the front part 10, as long as the shape of the apertures is suitable for engaging the material of the helical wire section and for preventing the helical wire section to disengage form the apertures.

The embodiments described above are described with reference to a single helical wire section 15 at each opposite end of the front part 10. However, more than one helical wire section 15 can be used at one and the same side of the front part 10. In such an embodiment one end of each of for example two helical wire sections 15 on one side of the front portion 10 is connected to the temple associated with that side of the front part 10. Thus, a wide temple could be supported by a helical wire section 15 at the top of the side of the front part 10 and a helical wire section at the bottom of the side of the front part 10. Preferably, these two helical wire sections 15 will have an opposite handedness.

The embodiments above are described with reference to a wire based temple. However, in other embodiments (not shown) the temples can be made of non-wire material, such as plastic plate or molded material or metal plate or cast material and the temple is attached with its front end to an extremity of a helical wire section 15.

The term "comprising" as used in the claims does not exclude other elements or steps. The term "a" or "an" as used in the claims does not exclude a plurality.

Although the present invention has been described in detail for purpose of illustration, it is understood that such detail is solely for that purpose, and variations can be made therein by those skilled in the art without departing from the scope of the invention.

## Claims

1. Spectacles or a spectacle frame, said spectacles or spectacle frame comprising a front part for receiving the lenses and a pair of temples, each of the temples connected at one of their extremities to an end of the front part by a hinge construction to allow the temples to move between a folded and an open position, **characterized in that** said hinge construction comprises a row of apertures located at an end of the front part and a helical wire section with one end of the wire section attached to a temple and the helical wire section being threaded through the apertures in the row.

2. Spectacles or a spectacle frame according to claim 1, wherein the helical wire section has a helical portion that is threaded though the apertures and substantially straight portion that is connected tc an extremity of a temple or the straight section is part of a temple.

3. Spectacles or a spectacle frame to claim 1 or 2, wherein said hinge construction is configured such that the free end of the spiral wire section abuts with a surface of the front part when the temple is in said open position

4. Spectacles or a spectacle frame according to claim 3, wherein an indentation is provided in the surface of the front part at the position where the free end of the wire section abuts with the front part.

5. Spectacles or a spectacle frame according to any of the receding claims, wherein the front part surrounds a pair of lenses and wherein said row of apertures includes an aperture that interrupts a loop of material of the front portion surrounding a lens, said row of apertures and said spiral wire section being configured to close said open loop and to tighten said loop around the lens when the spiral wire section is threaded through the apertures.

6. A spectacle frame according to any of the preceding claims, wherein the front part comprises two ledges at a substantially straight angle with the overall extend of the front part and the row of apertures is located in said ledges

7. Spectacles or a spectacle frame according to any of claims 1 to 4, wherein said row of apertures is located in the lenses.

8. A spectacle frame according to any of the preceding claims, wherein the cross sectional of said helical wire section wire has a circular or oval or rectangular or polygon shape.

9. A method for assembling a spectacle frame, said method comprising threading a helical wire section attached at one of its extremities to an extremity of a temple through a row of apertures provided in a front portion of a spectacle frame.

10. A method according to claim 9, wherein said front portion, said temple and said helical wire section are shaped and configured such that the temple needs to be bend over the front portion at least for the first rotation when unthreading the helical wire section
